# EUROPÄISCHE PATENTSCHRIFT

(11) **EP 2 744 838 B1**
(45) Veröffentlichungstag und Bekanntmachung des Hinweises auf die Patenterteilung: **17.03.2021**
(21) Anmeldenummer: 12825247.5
(22) Anmeldetag: 15.08.2012
(51) Int. Cl.: C08G 12/12, C08G 12/42, C08L 61/24, C09D 161/24, C09J 161/24, C08G 12/00, C08L 61/00, C09D 161/00, C09J 161/00

(54) **VERFAHREN ZUR HERSTELLUNG VON KONDENSATIONSHARZEN UND DEREN VERWENDUNG**
METHOD FOR PRODUCING CONDENSATION RESINS AND USE THEREOF
PROCÉDÉS DE FABRICATION DE RÉSINES DE CONDENSATION ET UTILISATION DE CES RÉSINES

(30) Priorität: 19.08.2011 EP 11178117; 05.06.2012 EP 12170823
(43) Veröffentlichungstag der Anmeldung: 25.06.2014
(73) Patentinhaber: BASF SE, 67056 Ludwigshafen am Rhein (DE)
(72) Erfinder: Börzsönyi, Gabor, 67059 Ludwigshafen (DE); Scherr, Günter, 67065 Ludwigshafen (DE); Menzel, Klaus, 67069 Ludwigshafen (DE); Meuer, Stefan, 67549 Worms (DE)
(74) Vertreter: BASF IP Association
(86) Internationale Anmeldenummer: PCT/IB2012/054151
(87) Internationale Veröffentlichungsnummer: WO 2013/027156

(56) Entgegenhaltungen:
- EP-A2- 0 033 115
- EP-A2- 0 167 960
- EP-A2- 0 210 471
- WO-A1-2007/028752
- WO-A1-2007/028752
- WO-A1-2011/009765
- WO-A1-2011/009765
- US-A- 4 102 840
- US-A- 4 102 840
- US-A- 4 295 847
- US-A- 4 855 394

## Beschreibung

Die vorliegende Erfindung betrifft neue Kondensationsharze aus Harnstoff, Formaldehyd und CH-aciden Aldehyden, Verfahren zu deren Herstellung sowie deren Verwendung.

Kondensationsprodukte aus Harnstoff bzw. seinen Derivaten mit Formaldehyd und CH-aciden Aldehyden sind bereits aus der Patentliteratur bekannt. Derartige Kondensationsharze werden häufig zur Bereitung von Pigmentpräparationen eingesetzt.

Diese Kondensationsharze erfordern für die Zubereitung derartiger Pigmentpräparationen die Vermischung mit organischen Lösungsmitteln zur Einstellung der Viskosität. Aufgrund gesetzlicher Regelungen besteht jedoch Bedarf an niedrigviskosen Kondensationsharzen um somit auch den Bedarf an organischen Lösungsmitteln zu verringern und so den Gehalt an flüchtigen organischen Verbindungen (VOC) abzusenken.

Aus DE-OS 1670283 ist ein Verfahren zur Herstellung von Hexahydropyrimidinderivaten bekannt, in dem Harnstoffe mit iso-Butyraldehyd und Formaldehyd in saurem Medium in Gegenwart von langkettigen Alkoholen umgesetzt werden.

Nach Abschluß dieser Reaktion wird neutralisiert und die flüchtigen Bestandteile abdestilliert.

Aus EP 167960 A2 ist ein Verfahren bekannt, in dem Harnstoff mit z.B. iso-Butyraldehyd in Gegenwart einer Säure und optional in Gegenwart eines oder mehrer Alkohole umgesetzt und anschließend mit Formaldehyd in Gegenwart mindestens eines Alkohols kondensiert wird.

Nach Abschluß dieser Reaktion werden die flüchtigen Bestandteile abdestilliert.

Diese Reaktionsführungen ist gemeinsam, daß zur Aufbau der Kondensationsharze Alkohole in Gegenwart mindestens einer der Komponenten Isobutyraldehyd, Harnstoff und Formaldehyd umgesetzt werden.

Nachteilig ist, daß zubereitungen aus so erhaltenen Kondensationharzen immer noch eine relativ hohe Viskosität aufweisen.

Aus WO 2011/009765 ist ein Verfahren zur Herstellung von Kondensationsharzen bekannt, in dem das fertige Harz zur Stabilisierung mit Diolen umgesetzt wird. Dies führt jedoch zu einer intermolekularen Vernetzung und somit zu einem Anstieg der Viskosität des Harzes.

Aus EP0210471, EP0033115, US4102840, WO 2007/028752 und EP 0167960 sind Verfahren zur Herstellung von Kondensationsharzen aus mindestens einem Harnstoff, Formaldehyd und mindestens einem CH-aciden Aldehyd bekannt.

Aufgabe der vorliegenden Erfindung war es, Kondensationsprodukte aus Harnstoff, Formaldehyd und CH-aciden Aldehyden zu entwickeln, die es erlauben, Zubereitungen mit einer niedrigen Viskosität zu erhalten.

Die Aufgabe wurde gelöst durch Verfahren zur Verringerung der Viskosität eines Kondensationsharzes, in dem man ein im wesentlichen ausreagiertes Kondensationsharz, aufgebaut aus mindestens einem, bevorzugt genau einem Harnstoff, Formaldehyd und mindestens einem, bevorzugt genau einem CH-aciden Aldehyd in einem Molverhältnis von 1 zu 2 bis 15 zu 2 bis 15, mit mindestens einem monofunktionellen Alkohol in Gegenwart mindestens einer Brönstedt-Säure umsetzt.

Unter "im wesentlichen ausreagiert" wird dabei verstanden, daß die Aufbaukomponenten der Kondensationsharze, Harnstoff, Formaldehyd und CH-acider Aldehyd, zu mindestens 95%, miteinander reagiert haben, bevorzugt zu mindestens 98%, besonders bevorzugt zu mindestens 99% und ganz besonders bevorzugt zu mindestens 99,5%.

Der Gehalt an freiem Formaldehyd im im wesentlichen ausreagierten Kondensationsharz sollte unter 5 Gew%, bevorzugt unter 3, besonders bevorzugt unter 2, ganz besonders bevorzugt unter 1 und insbesondere unter 0,5 Gew% liegen.

Der Gehalt an unumgesetzten Harnstoff im im wesentlichen ausreagierten Kondensationsharz sollte unter 2 Gew%, bevorzugt unter 1, besonders bevorzugt unter 0,5 und ganz besonders bevorzugt unter 0,1 Gew% liegen.

Der Gehalt an unumgesetzten CH-aciden Aldehyd im im wesentlichen ausreagierten Kondensationsharz sollte unter 3 Gew%, bevorzugt unter 2, besonders bevorzugt unter 1 und ganz besonders bevorzugt unter 0,5 Gew% liegen.

Der angegebene Umsatz und der niedrige Gehalt der Aufbaukomponenten wird bevorzugt erreicht, indem in der Herstellung des im wesentlichen ausreagierten Kondensationsharzes die Reaktion durch Neutralisierung eines in der Reaktion befindlichen Katalysators gestoppt und anschließend die flüchtigen Bestandteile zumindest teilweise, bevorzugt im wesentlichen durch Destillation entfernt wurden.

Ein weiterer Gegenstand der vorliegenden Erfindung ist ein Verfahren zur Herstellung von Kondensationsharzen aus mindestens einem, bevorzugt genau einem Harnstoff, Formaldehyd und mindestens einem, bevorzugt genau einem CH-aciden Aldehyd in einem Molverhältnis von 1 zu 2 bis 15 zu 2 bis 15, wobei man Harnstoffe der allgemeinen Formel (I) und/oder (II) 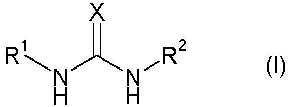 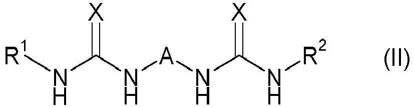 worin R¹ und R² unabhängig voneinander Wasserstoff oder gleiche oder verschiedene C₁ - C₂₀-Alkylreste , A einen C₁ - C₂₀-Alkylenrest und X Sauerstoff oder Schwefel bedeuten, mit Formaldehyd und einem CH-aciden Aldehyd der allgemeinen Formel (III) 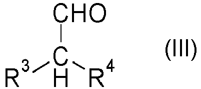 worin die Reste R³ und R⁴ unabhängig voneinander gleiche oder verschiedene Alkyl-, Cycloalkyl-, Aryl-, oder Alkylarylreste bedeuten oder R³ und R⁴ gemeinsam einen Ring bilden können, im Temperaturbereich zwischen 60 und 150°C in Gegenwart von Säuren oder Basen, gegebenenfalls in Gegenwart von Lösungs- und/oder Verdünnungsmittel umsetzt, wobei man nach Abschluß der Reaktion die Säuren oder Basen neutralisiert, flüchtige Bestandteile destillativ entfernt und anschließend in Gegenwart mindestens einer Säure mit mindestens einem Alkohol umsetzt.

Ein Vorteil des erfindungsgemäßen Verfahrens besteht darin, dass die nach dem erfindungsgemäßen Verfahren erhaltenen Kondensationsprodukte eine geringere Viskosität als nicht mit Alkohol umgesetzte Produkte aufweisen.

Dies ermöglicht einen erhöhten Festkörpergehalt in Pigmentpräparationen, was die Notwendigkeit zur Verwendung von Lösungsmitteln verringert, so dass geringere organische Emissionen (VOC) möglich sind.

Die erfindungsgemäß erhältlichen Kondensationsharze weisen in der Regel ein zahlenmittleres Molgewicht Mₙ von 300 bis weniger als 1000 g/mol, bevorzugt von 400 bis 950 g/mol und besonders bevorzugt von 500 bis 900 g/mol auf, ein gewichtsmittleres Molgewicht M_{w} von 500 bis 2000, sowie eine Polydispersität von 1,2 bis 3,0, bevorzugt 1,3 bis 2,5.

Ermittelt wurden die Werte zum zahlenmittleren und gewichtsmittleren Molekulargewicht Mₙ und M_{w} mittels gelpermeationschromatographischer Messungen auf PL-GEL (3-Säulen-Kombination; 1× Mini-Mix C und 2 × Mini-Mix E). Als Eluent wurde THF verwendet. Zur Kalibrierung wurden Polystyrol/Hexylbenzol-Referenzmaterialien mit Polydispersitäten von <1,1 verwendet. Die angegebenen Werte sind, soweit es sich nicht um Polymere des Styrols handelt, somit als Polystyrol-Äquivalente anzusehen. Verwendete Referenzmaterialien: Polystyrol von 3.000.000 bis 580 g/mol und Hexylbenzol 162 g/mol. Die Methode ist im Analytiker Taschenbuch Bd. 4, Seiten 433 bis 442, Berlin 1984 beschrieben.

Die erfindungsgemäßen Kondensationsharze weisen in der Regel eine Säurezahl gemäß DIN EN 2114 von weniger als 10 mg KOH/g auf, bevorzugt von weniger als 8, besonders bevorzugt von weniger als 5, ganz besonders bevorzugt von weniger als 3, insbesondere weniger als 2 und in speziellen Fällen weniger als 1 mg KOH/g auf.

Die erfindungsgemäßen Kondensationsharze weisen in der Regel eine Hydroxylzahl gemäß DIN ISO 4629 von 5 bis 60 mg KOH/g auf, bevorzugt von 10 bis 50, besonders bevorzugt von 15 bis 45 und ganz besonders bevorzugt von 20 bis 40 mg KOH/g auf.

Die erfindungsgemäßen Kondensationsharze weisen in der Regel eine Verseifungszahl gemäß DIN 53401 von weniger als 100 mg KOH/g auf, bevorzugt von 5 bis 90, besonders bevorzugt von 10 bis 70 und ganz besonders bevorzugt von 20 bis 50 mg KOH/g auf.

Die erfindungsgemäßen Kondensationsharze weisen in der Regel einen Restmonomerengehalt an Aldehyd (III), insbesondere an Isobutyraldehyd, von weniger als 500 Gew.ppm auf, bevorzugt von weniger als 400 Gew.ppm und besonders bevorzugt von weniger als 300 Gew.ppm.

Die erfindungsgemäßen Kondensationsharze weisen in der Regel einen Restmonomerengehalt an Formaldehyd, von weniger als 500 Gew.ppm auf, bevorzugt von weniger als 400 Gew.ppm, besonders bevorzugt von weniger als 300 Gew.ppm, ganz besonders bevorzugt von weniger als 200 und insbesondere von weniger als 100 Gew.ppm auf.

Die erfindungsgemäßen Kondensationsharze weisen in der Regel eine Glasübergangstemperatur T_{g} nach der DSC-Methode (Differential Scanning Calorimetry) gemäß ASTM 3418/82 mit einer Aufheizrate von 2,5 °C/min von weniger als 50 °C auf, bevorzugt von weniger als 40, besonders bevorzugt von weniger als 30, ganz besonders bevorzugt von weniger als 20 °C und insbesondere von weniger als 10 °C auf.

Zu den Aufbaukomponenten der erfindungsgemäßen Harze ist im Einzelnen folgendes auszuführen:

Als Harnstoffe eignen sich solche der allgemeinen Formel (I) oder (II) 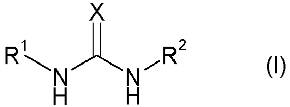 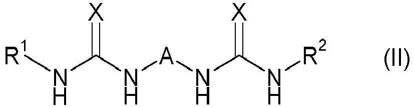 worin R¹ und R² unabhängig voneinander Wasserstoff oder gleiche oder verschiedene C₁ - C₂₀-, bevorzugt C₁- bis C₄-Alkylreste, A einen C₁ - C₂₀-, bevorzugt C₁ bis C₄-, besonders bevorzugt C₁- bis C₃- und ganz besonders bevorzugt C₁- bis C₂-Alkylenrest und X Sauerstoff oder Schwefel, bevorzugt Sauerstoff bedeuten,

Neben Harnstoff oder Thioharnstoff können auch mono- und disubstituierte Harnstoffe sowie Alkylendiharnstoffe eingesetzt werden.

Bevorzugt dient Harnstoff (H₂N-(CO)-NH₂) zur Herstellung der erfindungsgemäßen Harze.

Der Formaldehyd kann als wässrige, z.B. als 30 bis 55%ige, bevorzugt 35 bis 49 %ige, besonders bevorzugt 40 bis 49 %ige Lösung, als Paraformaldehyd oder in Form von Trioxan, Tetroxan oder Formaldehydacetalen eingesetzt werden, bevorzugt in wässriger Lösung.

Da die Kondensation über Hydroxymethylharnstoffe verläuft, kann man an Stelle der Harnstoffe und des Formaldehyds auch die entsprechenden Hydroxymethylharnstoffe einsetzen.

Diese können bevorzugt durch eine Vorkondensation des Formaldehyd mit Harnstoff in situ erzeugt werden, bevorzugt wird das so erhaltene Reaktionsgemisch der Vorkondensation in das erfindungsgemäße Verfahren eingesetzt.

Für eine solche Vorkondensation werden Harnstoff und Formaldehyd im Molverhältnis 1:1 bis 1:15, bevorzugt 1:3 bis 1:10, besonders bevorzugt 1:7 bis 1:9 bei Temperaturen von 20 °C bis 120 °C, bevorzugt 50 - 120 °C für eine Dauer von 10 min bis 6 Stunden umgesetzt. Diese Umsetzung erfolgt in einer bevorzugten Ausführungsform bei pH-Werten von bis zu 6 und in einer anderen bevorzugten Ausführungsform im Alkalischen, beispielsweise bei pH-Werten von mindestens 8, bevorzugt mindestens 9 und ganz besonders bevorzugt mindestens 10. Das dabei entstehende Reaktionswasser kann im Reaktionsgemisch belassen werden, kann aber auch zusammen mit dem Wasser, das durch Verwendung von wasserhaltigem Formaldehyd eingebracht wurde, beispielsweise durch Destillation oder Strippen, entfernt werden, bevorzugt durch azeotrope Destillation mit einem Schleppmittel.

Das so erhaltene, vorkondensierte Reaktionsgemisch wird dann in einer bevorzugten Ausführungsform in das erfindungsgemäße Verfahren eingesetzt und der in die Vorkondensation eingesetzte Formaldehyd und Harnstoff bei der Reaktionsstöchiometrie berücksichtigt.

CH-acide Aldehyde können solche der allgemeinen Formel (III) sein 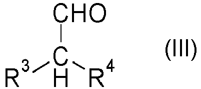 worin die Reste R³ oder R⁴ unabhängig voneinander gleiche oder verschiedene C₁ - C₂₀-, bevorzugt C₁- bis C₄-Alkyl-, C₃ - C₂₀-, bevorzugt C₅- bis C₁₂-Cycloalkyl-, C₆ - C₂₀-, bevorzugt C₆- bis C₁₂-Aryl-, oder Alkylarylreste bedeuten oder R³ und R⁴ gemeinsam einen Ring bilden können. Unter CH-aciden Aldehyden sind erfindungsgemäß solche zu verstehen, die an dem der Carbonylgruppe benachbarten Kohlenstoffatom C_{α} genau ein Wasserstoffatom aufweisen.

Beispiel für C₁ - C₂₀-Alkylreste sind Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Heptadecyl, Octadecyl, 1,1-Dimethylpropyl, 1,1-Dimethylbutyl und 1,1,3,3-Tetramethylbutyl. Beispiel für C₃ - C₂₀-Cycloalkylreste sind Cyclopropyl, Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, und Norbornyl.

Beispiele für C₆ - C₂₀-Aryl- oder Alkylarylreste sind Phenyl, Tolyl, Xylyl, α-Naphthyl, β-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, *iso*-Propylphenyl, tert.-Butylphenyl, Dodecylphenyl, Benzyl, 1-Phenylethyl, 2-Phenylethyl, a,a-Dimethylbenzyl, Benzhydryl, p-Tolylmethyl und 1-(p-Butylphenyl)-ethyl.

Unter C₁-C₄-Alkyl wird im Rahmen dieser Schrift Methyl, Ethyl, iso-Propyl, n-Propyl, n-Butyl, isoButyl, sek-Butyl und tert-Butyl verstanden, bevorzugt Methyl, Ethyl, n-Propyl und n-Butyl, besonders bevorzugt Methyl und Ethyl und ganz besonders bevorzugt Methyl.

Beispiele für Reste R¹ und R² sind unabhängig voneinander Wasserstoff und C₁ bis C₄-Alkyl, bevorzugt Wasserstoff und Methyl und besonders bevorzugt Wasserstoff.

Mögliche Alkylenreste A sind beispielsweise Methylen, 1,2-Ethylen, 1,2-Propylen, 1,3-Propylen, 1,4-Butylen, 1,6-Hexylen, 2-Methyl-1,3-Propylen, 2-Ethyl-1,3-Propylen, 2,2-Dimethyl-1,3-Propylen und 2,2-Dimethyl-1,4-butylen.

Bevorzugte Reste A sind Methylen, 1,2-Ethylen, 1,2-Propylen und 1,3-Propylen, besonders bevorzugt sind Methylen und 1,2-Ethylen und besonders bevorzugt ist Methylen.

Bevorzugt sind die Reste R³ und R⁴ unabhängig voneinander bevorzugt Alkyl oder Cyclo-alkyl, besonders bevorzugt C₁ bis C₄-Alkyl, ganz besonders bevorzugt Methyl, Ethyl, n-Propyl und n-Butyl, insbesondere Methyl, Ethyl und n-Butyl und speziell Methyl.

Bilden die Reste R³ und R⁴ gemeinsam mit dem der Carbonylgruppe benachbarten Kohlenstoffatom C_{α} einen Ring, so handelt es sich dabei bevorzugt um einen fünf- bis zwölfgliedrigen Ring, beispielsweise Cyclopentyl, Cyclohexyl, Cyclooctyl oder Cyclododecyl, bevorzugt Cyclopentyl, Cyclohexyl oder Cyclododecyl und besonders bevorzugt Cyclopentyl oder Cyclohexyl.

Beispiele für CH-acide Aldehyde sind bevorzugt ausschließlich Alkyl- und/oder Cycloalkylgruppen aufweisende CH-acide Aldehyde, besonders bevorzugt Isobutyraldehyd, 2-Ethylhexanal, 2-Methylpentanal und Isovaleraldehyd, ganz besonders bevorzugt Isobutyraldehyd, 2-Ethylhexanal und 2-Methylpentanal und insbesondere Isobutyraldehyd.

Für das erfindungsgemäße Verfahren werden Harnstoff, Formaldehyd und CH-acider Aldehyd in einem Molverhältnis von 1 zu 2 bis 15 zu 2 bis 15, bevorzugt von 1 zu 3 bis 12 zu 3 bis 12, besonders bevorzugt von 1 zu 3,8 bis 9 zu 3,8 bis 9 eingesetzt.

Als Säuren eignen sich anorganische und organische Säuren, vorzugsweise Säuren mit einem pKs-Wert bis zu 3. Beispiele dafür sind Schwefelsäure, Phosphorsäure, Salpetersäure, Salzsäure, Phosphorige Säure (H₃PO₃), Diphosphorsäure (H₄P₂O₇), Sulfonsäuren, besonders bevorzugt Methansulfonsäure, Trifluormethansulfonsäure, para-Toluolsulfonsäure, Benzolsulfonsäure, Dodecylbenzolsulfonsäure, Cyclododecansulfonsäure, Kamphersulfonsäure, Schwefelsäure oder saure lonentauscher mit Sulfonsäuregruppen, sowie Ameisensäure.

Es ist auch möglich, wenn auch weniger bevorzugt, die Kondensation basisch zu katalysieren. Dazu können basische Alkalimetall-, Erdalkalimetall- oder quartäre Ammoniumverbindungen, bevorzugt Alkalimetallverbindungen, besonders bevorzugt Natrium oder Kalium, ganz besonders bevorzugt Natrium, beispielsweise Oxide, Hydroxide (OH⁻), Carbonate (CO₃²⁻), Amide (NH₂⁻) oder C₁ bis C₂₀-Alkanolate, bevorzugt Hydroxide oder C₁ bis C₄-Alkanolate, besonders bevorzugt Hydroxide, Methanolate, Ethanolate oder tert.-Butanolate, ganz besonders bevorzugt Hydroxide oder Methanolate eingesetzt werden.

Der Katalysator wird im Allgemeinen in Mengen von 0,5 bis 30 Mol% bezogen auf den CH-aciden Aldehyd eingesetzt, bevorzugt in Mengen von 2 bis 20, besonders bevorzugt 3 bis 10 Mol%

Insbesondere wenn man basische Verbindungen einsetzt, so können zusätzlich auch Phasentransferkatalysatoren zugesetzt werden.

Bevorzugte Phasentransferkatalysatoren sind tetrasubstituierte Ammoniumsalze, besonders bevorzugt der Formel

⁺NR⁵R⁶R⁷R⁸ X⁻,

worin
R⁵ bis R⁸ jeweils unabhängig voneinander C₁ bis C₂₀-Alkyl oder C₆ bis C₂₀- Alkylarylreste und
X⁻ ein Anion einer Säure
bedeuten.

Bevorzugt weisen die Reste R⁵ bis R⁸ in Summe mindestens 8, bevorzugt mindestens 12, besonders bevorzugt mindestens 15 Kohlenstoffatome auf.

Beispiele für Anionen X⁻ sind Chlorid, Bromid, lodid, Sulfat, Methylsulfat, Ethylsulfat, Methylcarbonat, Trifluormethansulfonat, C₁-C₂₀-Alkylsulfonat oder C₆-C₂₀-Alkylarylsulfonat.

Die Kondensation wird allgemein im Temperaturbereich zwischen 60 und 150, vorzugsweise 80 und 100°C durchgeführt.

Bei der Durchführung des erfindungsgemäßen Verfahrens können Lösungs- und/oder Verdünnungsmittel, gegebenenfalls auch als Schleppmittel zur azeotropen Entfernung von Wasser mitverwendet werden. Als Lösungsmittel zur azeotropen Entfernung von Wasser eignen sich vor allem aliphatische, cycloaliphatische und aromatische Kohlenwasserstoffe oder Gemische davon. Vorzugsweise kommen n-Pentan, n-Hexan, n-Heptan, Cyclohexan, Methylcyclohexan, Benzol, Toluol oder Xylol zur Anwendung. Besonders bevorzugt sind Cyclohexan, Methylcyclohexan, Xylol und Toluol.

Als Lösungsmittel haben sich besonders aromatische Kohlenwasserstoffe bewährt. Unter diesen ist besonders Xylol hervorzuheben.

Der Umsatz kann beispielsweise anhand der ausgetragenen Menge Wasser bestimmt werden, aber auch durch Verfolgung der Viskosität des Reaktionsgemischs. Bevorzugt wird der Umsatz bezogen auf die bereits umgesetzten Aldehydfunktionen. Die freien Aldehydfunktionen werden bevorzugt bestimmt nach der Methode von De Jong (DIN EN ISO 9020) und der unumgesetzte CH-acide Aldehyd wird gaschromatographisch bestimmt. Der so bestimmte Umsatz sollte in der Regel mindestens 30%, bevorzugt mindestens 40%, besonders bevorzugt mindestens 50, ganz besonders bevorzugt mindestens 60 und insbesondere mindestens 70% betragen.

Das aus der Kondensation erhaltene Harz wird in der Regel in mindestens einem, bevorzugt genau einem Lösungsmittel, bevorzugt Cyclohexan, Methylcyclohexan, Xylol oder Toluol, besonders bevorzugt Xylol gelöst und in einer Wäsche neutralisiert. Nach einer sauer katalysierten Kondensation wird also mit mindestens einer wäßrigen Base gewaschen und nach einer basisch katalysierten Kondensation mit mindestens einer wäßrigen Säure.

Die aus der Wäsche erhaltene leicht basische oder saure organische Phase kann dann nochmals mit einer Säure oder einer Base neutralisiert werden, so daß man eine nahezu neutrale organische Phase erhält.

Die Wäsche kann beispielsweise in einem Rührbehälter oder in anderen herkömmlichen Apparaturen, z.B. in einer Kolonne oder Mixer-Settler-Apparatur, durchgeführt werden. Verfahrenstechnisch können für eine Wäsche im erfindungsgemäßen Verfahren alle an sich bekannten Extraktions- und Waschverfahren und -apparate eingesetzt werden, z.B. solche, die in Ullmann's Encyclopedia of Industrial Chemistry, 6th ed, 1999 Electronic Release, Kapitel: Liquid - Liquid Extraction - Apparatus, beschrieben sind. Beispielsweise können dies ein- oder mehrstufige, bevorzugt einstufige Extraktionen, sowie solche in Gleich- oder Gegenstromfahrweise, bevorzugt Gegenstromfahrweise sein.

Vorzugsweise werden Siebboden- oder gepackte beziehungsweise Füllkörperkolonnen, Rührbehälter oder Mixer-Settler-Apparate, sowie Kolonnen mit rotierenden Einbauten eingesetzt.

Das fertige Kondensationsharz wird dann erhalten, indem man aus dieser organischen Phase das organische Lösungsmittel abdestilliert.

Die Destillation wird bevorzugt bei vermindertem Druck, destillativ oder rektifikativ durchgeführt. Dies kann gegebenenfalls durch Strippen mit einem geeigneten reaktionsträgen Gas unterstützt werden.

Eine einstufige Destillation erfolgt bevorzugt in einem Fallfilmverdampfer, Kletterverdampfer, Dünnschichtverdampfer, Langrohrverdampfer oder Wendelrohrverdampfer, besonders bevorzugt in einem Fallfilmverdampfer.

Eine Rektifikation erfolgt in Rektifikationskolonnen von bekannter Bauart, die trennwirksame Einbauten (z. B. Glocken-, Thormann-, Ventil-, Sieb- oder Dual-Flow-Böden) aufweisen oder Schüttungen oder gerichtete Packungen enthalten. Die Kolonnen haben in der Regel 10 - 30 theoretische Böden. Die Kondensatoren sind ebenfalls von bekannter Bauart, z. B. Röhren- oder Plattenwärmetauscher.

Das nach Destillation erhaltene Kondensationsharz wird anschließend verfestigt, beispielsweise per Pastillierung, d.h. durch Aufgabe von Tropfen auf eine Kühlfläche, beispielsweise ein Stahlband oder Stahlteller, auf der sich die Tropfen üblicherweise im Bereich von wenigen Minuten ruhend verfestigen sollen, oder per Schuppung, d.h. die Aufgabe von einem Film auf eine Kühlfläche, beispielsweise ein Stahlband oder eine Walze, auf der sich der Film im Bereich von wenigen Minuten zu einer Feststoffschicht umwandeln soll, die anschließend mit einem Messer unter Erzeugung von Bruchstücken, den Schuppen, abgenommen werden kann.

Ebenso ist ein Versprühen der Schmelze in ein gekühltes Gas zur Erzeugung von Tröpfchen, die im Fallen durch das Gas zu einem dispersen Feststoff erstarren sollen, möglich.

Anschließend wird das so erhaltene feste Kondensationsharz gelagert und/oder verpackt.

Selbstverständlich ist es auch möglich, das erhaltene Kondensationsharz statt zu verfestigen in einem Lösungsmittel oder Lösungsmittelgemisch zu belassen oder zu lösen und in flüssiger Form weiterzuverarbeiten.

Die erfindungsgemäße Umsetzung des im wesentlichen ausreagierten Kondensationsharzes mit mindestens einem Alkohol (V) kann zu einem beliebigen Zeitpunkt nach der Herstellung des Kondensationsharzes erfolgen, beispielsweise direkt nach der destillativen Abtrennung der leichtflüchtigen Bestandteile aber auch nach einer längeren Lagerung des Kondensationsharzes.

In einer bevorzugten Ausführungsform erfolgt die erfindungsgemäße Umsetzung mit dem mindestens einen Alkohol (V) ausgehend von der oben beschriebenen gewaschenen oder neutralisierten organischen Phase. Falls erforderlich kann dies mit weiterem Lösungsmittel versehen werden, in der Regel wird die organische Phase jedoch so in die erfindungsgemäße Umsetzung eingesetzt, wie sie anfällt.

Die erfindungsgemäße Reaktion wird mit mindestens einem, beispielsweise ein bis drei, bevorzugt ein bis zwei und besonders bevorzugt genau einem Alkohol (V), bevorzugt einem Alkanol, besonders bevorzugt einem C₁ bis C₂₀-Alkanol, ganz besonders bevorzugt einem C₁ bis C₁₀-Alkanol und speziell einem C₁ bis C₈-Alkanol durchgeführt.

Beispiele für Alkohole sind zusätzlich zu den unten aufgeführten Alkanolen beispielsweise Alkylengylkol- und Polyalkylenglykolmonoalkylether mit einem Molgewicht bis zu 300 g/mol, bevorzugt Polyethylenglykolmonoalkylether und Polypropylenglykolmonoalkylether der Formel HO-[-Xᵢ-]ₙ-R⁹, worin
n eine positive ganze Zahl von 1 bis 5, bevorzugt von 1 bis 4, besonders bevorzugt von 1 bis 3 und ganz besonders bevorzugt 1 oder 2 und
R⁹ einen C₁ - C₂₀-, bevorzugt einen C₁- bis C₄-Alkylrest
bedeuten und
jedes Xᵢ für i = 1 bis n unabhängig voneinander ausgewählt sein kann aus der Gruppe

-CH₂-CH₂-O-, -CH₂-CH(CH₃)-O- und -CH(CH₃)-CH₂-O-, -CH₂-C(CH₃)₂-O-.

Bevorzugt sind Ethylenglykolmonomethylether, Ethylenglykolmonoethylether, Ethylenglykolmonobutylether und 1,3-Propandiolmonomethylether.

Beispiele für Alkanole sind Methanol, Ethanol, *iso*-Propanol, n-Propanol, n-Butanol, *iso*-Butanol, *sek*-Butanol, *tert*-Butanol, n-Pentanol, n-Hexanol, n-Heptanol, n-Octanol, 2-Ethylhexanol, 3-Propylheptanol, n-Decanol, n-Dodecanol (Laurylalkohol), Stearylalkohol und Cetylalkohol. Bevorzugte Verbindungen (V) sind Methanol, Ethanol, *iso*-Propanol, n-Propanol, n-Butanol und 2-Ethylhexanol, besonders bevorzugt sind Methanol, Ethanol und n-Butanol, ganz besonders bevorzugt sind Methanol und n-Butanol und insbesondere n-Butanol.

Das umzusetzende Kondensationsharz kann in einer beispielhaften Ausführungsform in einer ausrecihenden Menge des Alkohols (V) gelöst und anschließend umgesetzt werden.

In einer weiteren, bevorzugten Ausführungsform wird das umzusetzende Kondensationsharz in einem geeigneten Lösungsmittel gelöst und mit beispielsweise 10 bis 100, bevorzugt 20 bis 80 und besonders bevorzugt 30 bis 60 Gew% Alkohol (V) bezogen auf das Kondensationsharz umgesetzt werden.

Denkbare Lösungsmittel sind die oben genannten Kohlenwasserstoffe, Ketone, Ether und Ester. Bevorzugt sind n-Pentan, n-Hexan, n-Heptan, Cyclohexan, Methylcyclohexan, Benzol, Toluol, Xylol, Aceton, Methylethylketon, Ethylacetat, Butylacetat, Methylglykolacetat, Ethylglykolacetat, Methoxypropylacetat, Butylglykol, Tetrahydrofuran, Dioxan und Ethylglykolether.

Zur Katalyse der erfindungsgemäßen Umsetzung werden dem Reaktionsgemisch bis zu 1 Gew% bezogen auf das Kondensationsharz mindestens einer, bevorzugt genau einer Brönstedt-Säure, bevorzugt 0,05 bis 0,5, besonders bevorzugt 0,08 bis 0,3 und besonders bevorzugt 0,1 bis 0,2 Gew% Brönstedt-Säure zugegeben. Der pH-Wert des Reaktionsgemischs sollte bevorzugt 2 bis 5, bevorzugt 3 bis 4 betragen.

Als Brönstedt-Säuren eignen sich anorganische und organische Säuren, vorzugsweise Säuren mit einem pKs-Wert bis zu 3. Beispiele dafür sind Schwefelsäure, Phosphorsäure, Salpetersäure, Salzsäure, Phosphorige Säure (H₃PO₃), Diphosphorsäure (H₄P₂O₇), Sulfonsäuren, beispielsweise Methansulfonsäure, Trifluormethansulfonsäure, para-Toluolsulfonsäure, Benzolsulfonsäure, Dodecylbenzolsulfonsäure, Cyclododecansulfonsäure, Kamphersulfonsäure oder saure lonentauscher mit Sulfonsäuregruppen, sowie Ameisensäure. Bevorzugt sind Schwefelsäure, Phosphorsäure, Salpetersäure und Salzsäure, besonders bevorzugt ist Schwefelsäure.

Kondensationsharz und Alkohol (V) werden 1 bis 10 Stunden, bevorzugt 2 bis 8 Stunden und besonders bevorzugt 2 bis 7 und ganz besonders bevorzugt 2 bis 4 Stunden bei einer Temperatur von 40 bis 100 °C, bevorzugt 50 bis 80 °C miteinander umgesetzt.

Bei Erreichen des gewünschten Molekulargewichts bzw. Umsatzes wird die Kondensation gestoppt.

Zum Stoppen der Reaktion wird mit einer Base, beispielsweise Natrium- oder Kaliumalkanolat und bevorzugt NaOH oder KOH, neutralisiert und der im Reaktionsgemisch enthaltene überschüssige Alkohol (V) sowie gegebenenfalls enthaltene, destillativ abtrennbare niedere Oligomere oder unumgesetzte Monomere durch Destillation oder Strippen entfernt.

Der Alkohol (V) wird in der Regel auf einen Restgehalt von nicht mehr als 5 Gew%, bevorzugt nicht mehr als 4 Gew%, besonders bevorzugt nicht mehr als 3 Gew%, ganz besonders bevorzugt nicht mehr als 2 Gew% und insbesondere nicht mehr als 1 Gew% abgetrennt.

Wenn während der Umsetzung Lösungsmittel anwesend war, wird dieses ebenfalls, bevorzugt destillativ, auf einen Restgehalt von nicht mehr als 5 Gew%, bevorzugt nicht mehr als 4 Gew%, besonders bevorzugt nicht mehr als 3 Gew%, ganz besonders bevorzugt nicht mehr als 2 Gew% und insbesondere nicht mehr als 1 Gew% abgetrennt.

Die erfindungsgemäße Umsetzung ist diskontinuierlich und kontinuierlich möglich.

Die nach dem erfindungsgemäßen Verfahren hergestellten Kondensationsharze eignen sich insbesondere zur Herstellung von Pigmentpräparationen.

Dazu werden mindestens ein Pigment P und mindestens ein erfindungsgemäßes Kondensationsharz K, sowie gegebenenfalls mindestens ein Verdünnungsmittel V sowie gegebenenfalls mindestens ein Additiv AD miteinander vermischt.

Eine derartige Vermischung kann beispielsweise erfolgen in einem Rührbehälter, Mischer, Extruder oder bevorzugt in einem Dispergator, oder Kneter.

Pigmente sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium.

Beispiele für Pigmente P umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepasst werden.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente und Ruß.

Ferner ist Titandioxid als Pigment zu nennen.

Beispiele für Pigmente P sind aufgelistet in WO 97/08255, S. 8, Z. 11 bis S. 11, Z. 16, was hiermit Bestandteil der Offenbarung dieser Schrift sei.

Beispiele für Verdünnungsmittel V sind aromatische und/oder (cyclo)aliphatische Kohlenwasserstoffe und deren Gemische, halogenierte Kohlenwasserstoffe, Ester und Ether.

Bevorzugt sind aromatische Kohlenwasserstoffe, (cyclo)aliphatische Kohlenwasserstoffe, Alkansäurealkylester, alkoxylierte Alkansäurealkylester und deren Gemische.

Besonders bevorzugt sind ein- oder mehrfach alkylierte Benzole und Naphthaline, Alkansäurealkylester und alkoxylierte Alkansäurealkylester sowie deren Gemische.

Ganz besonders bevorzugt sind Xylol und 1-Methoxy-2-propylacetat.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell. Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C,) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

Halogenierte Kohlenwasserstoffe sind beispielsweise Chlorbenzol und Dichlorbenzol oder dessen Isomerengemische.

Ester sind beispielsweise n-Butylacetat, Ethylacetat, 1-Methoxy-2-propylacetat und 2-Methoxyethylacetat.

Ether sind beispielsweise THF, Dioxan sowie die Mono- und Dimethyl-, -ethyl- oder -n-butylether von Ethylenglykol, Diethylenglykol, Triethylenglykol, Propylenglykol, Dipropylenglykol oder Tripropylenglykol.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

Weiterhin bevorzugt sind n-Butylacetat, Ethylacetat, 1-Methoxy-2-propylacetat, 2-Methoxyethylacetat, sowie deren Gemische, insbesondere mit den oben aufgeführten aromatischen Kohlenwasserstoffgemischen.

Bevorzugt werden die erfindungsgemäß hergestellten Kondensationsharze zur Einstellung der Viskosität als 70 bis 90%ige Lösung in Xylol oder 1-Methoxy-2-propylacetat formuliert.

Additive AD sind beispielsweise Dispergiermittel, Verlaufshilfsmitteln, Weichmacher und Rheologiehilfsmittel. Derartige Stoffe sind dem Fachmann bekannt.

Gegenstand der vorliegenden Erfindung sind somit auch Pigmentpräparationen, enthaltend
- mindestens ein Pigment P,
- gegebenenfalls mindestens ein Verdünnungsmittel V,
- mindestens ein erfindungsgemäßes Kondensationsharz K sowie
- gegebenenfalls mindestens ein Additiv AD.

Typische Zusammensetzungen für derartige Pigmentpräparationen sind
- 10 - 80 Gew% P,
- 0 - 40 Gew% V,
- 10 - 70 Gew% K sowie
- 0 - 15 Gew% AD,
mit der Maßgabe, dass die Summe immer 100 Gew% beträgt.

Es stellt einen Vorteil der erfindungsgemäßen Kondensationsharze dar, dass durch deren Verwendung in den erfindungsgemäßen Pigmentpräparationen eine höhere Menge Pigment P eingebracht werden kann (Pigmentierungshöhe) und/oder die erforderliche Menge an Verdünnungsmittel V verringert werden kann, jeweils im Vergleich zu analogen Kondensationsharzen mit einem Erweichungspunkt von 80 °C oder mehr.

Zudem wird die Farbstärke der Pigmentpräparationen durch Verwendung der erfindungsgemäßen Kondensationsharze erhöht.

Ferner können die erfindungsgemäßen Kondensationsharze in Kombination mit anderen, üblicherweise als Lackbindemittel zu verwendenden physikalisch trocknenden Filmbildnern, wie Cellulosederivaten, z.B . Nitrocellulose, Ethylcellulose , Celluloseacetat, Celluloseacetobutyrat, Chlorkautschuk, Mischpolymerisaten auf Vinylester-, Vinylether-, Vinylchlorid-, Acrylester-, Vinylaromatenbasis, z.B. Vinylchlorid/Vinyliso-butyläthercopolymerisate oder chemisch trocknenden Bindemitteln, wie Alkydharzen, trocknenden und halbtrocknenden Ölen zur Herstellung von Lacken eingesetzt werden, wobei der Gehalt dieser Lacke an erfindungsgemäßen Kondensationsharz in weiten Grenzen variieren kann, in den meisten Fällen jedoch nicht mehr als 50 Gew.% des gesamten Bindemittels beträgt.

Die erfindungsgemäßen Lackbindemittel eignen sich unter Anwendung üblicher Applikationsverfahren, wie Streichen, Spritzen, Gießen, zum Lackieren von Substraten, wie Holz, Spanplatten, Papier und Metall, z.B. Eisenblechen.

Die nach den erfindungsgemäßen Verfahren erhaltenen Kondensationsharze sind lagerstabil und weisen eine niedrigere Viskosität auf als vergleichbare, mit Natriummethanolat stabilisierte Kondensationsharze, so dass sich eine geringer Notwendigkeit zur Verwendung flüchtiger organischer Verbindungen ergibt und ein höherer Gehalt an nichtflüchtigen Bestandteilen in den Formulierungen eingestellt werden kann.

Sie lassen sich sehr vorteilhaft verarbeiten. Man erhält Lackierungen mit sehr guten mechanischen Eigenschaften, gutem Glanz, guter Lichtbeständigkeit und guter Wasserfestigkeit. Die erfindungsgemäßen Lackbindemittel sind beispielsweise sehr vorteilhaft in Spritzmattinen, Schnellschliffgrundierungen, Papierlacken und Korrosionsschutzlacken zu verwenden.

Die in den Beispielen angeführten Teile und Prozente bedeuten Gewichtsteile bzw. Gewichtsprozente.

### Beispiele

### Beispiel 1

340,2 g (420 ml, 4,59 mol) n-Butanol wurden vorgelegt und innerhalb von 1 Stunde bei einer Temperatur von 30 °C ansteigend bis 50 °C portionsweise 226,8 g pulverisiertes Laropal® A81 (kommerziell erhältliches Kondensationsharz auf Basis iso-Butyraldehyd, Formaldehyd und Harnstoff der BASF SE, Ludwigshafen) eingetragen, bis dieses gelöst war und eine klare Lösung erhalten wurde. Zu dieser wurden bei einer Temperatur von 50 °C 9 Tropfen 50 Gew%iger Schwefelsäure (pH-Wert des Reaktionsgemischs mit pH-Papier gemessen unter 3,8) zugegeben und das Reaktionsgemisch bei 50 °C für 6 Stunden gerührt, wobei bei einem Druck von anfänglich 600 mbar und steigernd auf etwa 500 mbar ein klares Destillat abgezogen wurde. Anschließend wurde das Reaktionsgemisch mit 40 Tropfen 25 Gew%iger Natronlauge neutralisiert und das warme Reaktionsgemisch aus dem Reaktionsgefäß abgefüllt.

Man erhielt 300,5 g einer klaren, viskosen Flüssigkeit mit einem Festkörpergehalt von 76,3 Gew% und einer Viskosität von 1330 mPas und 76,9 g eine klaren Flüssigkeit als Destillat.

Das eingesetzte Kondensationsharz wies ein per GPC bestimmtes zahlenmittleres Molekulargewicht Mₙ von etwa 1500 und ein gewichtsmittleres Molekulargewicht M_{w} von etwa 4900 g/mol auf, wohingegen das erhaltene Kondensationsharz ein zahlenmittleres Molekulargewicht Mₙ von etwa 500 und ein gewichtsmittleres Molekulargewicht M_{w} von etwa 780 g/mol aufwies.

### Anwendungsbeispiele zur Verringerung des VOC-Gehaltes

Zur Herstellung der Pigmentformulierungen wurden die Komponenten gemäß den Gewichtsangaben in der Tabelle miteinander dispergiert und der Gehalt an organischen Komponenten (VOC) in g/l sowie die Viskosität bestimmt.

Die miteinander verglichenen Formulierungen wurden mit der angegebenen Menge Lösungsmittel auf eine vergleichbare Viskosität eingestellt.

**Beispiel A: Anorganisches Gelbpigment mit Harz gemäß Beispiel 1**

| | |
|---|---|
| Harz gemäß Beispiel 1 | 34 Tl. |
| 1-Methoxy-2-propylacetat (MPA) | 4,5 Tl. |
| EFKA 4330 | 6,5 Tl. |
| Bayferrox 3920 | 55 Tl. |
| VOC berechnet | 252 |
| Viskosität [mPas] | 1980 |

**Beispiel B: Organisches Blaupigment mit Harz gemäß Beispiel 1**

| | |
|---|---|
| Harz gemäß Beispiel 1 | 64 Tl. |
| 1-Methoxy-2-propylacetat (MPA) | 6 Tl. |
| EFKA 4330 | 10 Tl. |
| Heliogenblau L 7101 F | 20,0 Tl. |
| VOC berechnet | 248 |
| Viskosität [mPas] | 1726 |

**Vergleichsbeispiel C: Anorganisches Gelbpigment mit Laropal® A81 (Vergleich zu Beispiel A)**

| | |
|---|---|
| Laropal® A81 | 30 Tl. |
| 1-Methoxy-2-propylacetat (MPA) | 8,5 Tl. |
| EFKA 4330 | 6,5 Tl. |
| Bayferrox 3920 | 55 Tl. |
| VOC berechnet | 402 |
| Viskosität [mPas] | 1900 |

**Vergleichsbeispiel D: Organisches Blaupigment mit Laropal® A81 (Vergleich zu Beispiel B)**

| | |
|---|---|
| Laropal® A81 | 56,7 Tl. |
| 1-Methoxy-2-propylacetat (MPA) | 13,3 Tl. |
| EFKA 4330 | 10 Tl |
| Heliogenblau L 7101 F | 20,0 Tl. |
| VOC berechnet | 420 |
| Viskosität [mPas] | 1480 |

Einsatzstoffe:
MPA: 1-Methoxy-2-propylacetat (organisches Lösemittel als Verdünner eingesetzt wird)
EFKA 4330: Netz- und Disbergieradditiv
Bayferrox® 3920: Eisenoxidgelb der Firma Lanxess als anorganisches Pigment
Heliogenblau® L 7101 F: Phtalocyaninblau als organisches Pigment

Man sieht, daß mit dem handelsüblichen Harz verglichen mit dem Harz nach dem erfindungsgemäßen Verfahren zum Erreichen einer vergleichbaren Viskosität eine deutlich höhere Menge Lösungsmittel eingesetzt werden muß, was einen erhöhten VOC-Wert zur Folge hat, wobei gleichzeitig nur eine geringere Menge Pigment eingearbeitet werden kann, was ein Produkt mit einer geringeren Farbstärke erbringt.

### Beispiel 2

In einem mit Kühler, Thermometer, Rührer und Tropftrichter ausgestatteten Kolben wurden 750 Teile Formaldehyd 40%ig, 720 Teile Isobutyraldehyd und 150 Teile Harnstoff gemischt und innerhalb von 10 Minuten mit 150 Teilen 75%iger Schwefelsäure versetzt. Die Mischung wurde auf 80°C aufgeheizt und 3 Stunden bei dieser Temperatur reagieren gelassen. Anschließend fügte man 800 Teile Xylol hinzu, ließ 20 Minuten bei 75 °C rühren und trennte nach Abschalten des Rührers die wäßrige Phase ab. Dann wurden ca. 400 Teile Xylol bei 80°C und 100 mbar abdestilliert. Anschließend wurden 280 Teile n-Butanol und 2 Teile 50%ig wässrige Schwefelsäure zugegeben und die Mischung auf 80°C aufgeheizt und 2 Stunden bei dieser Temperatur gerührt. Anschließend wurde 50%ige, wässrige Natronmlauge bis zur Erreichung eines neutralen pH zugegeben und die Mischung bei 80°C und 50 mbar für 2 Stunden destilliert. Die Viskosität der Lösung wurde mit ca. 66 TeilemMethoxypropylacetat auf 2000 mPas eingestellt und diese Lösung als Endprodukt genommen.

**Beispiel E: Anorganisches Gelbpigment mit Harz gemäß Beispiel 2**

| | |
|---|---|
| Harz gemäß Beispiel 2 | 35,0 Tl. |
| 1-Methoxy-2-propylacetat (MPA) | 3,5 Tl. |
| EFKA 4330 | 6,5 Tl |
| Bayferrox 3920 | 55,0 Tl. |
| VOC berechnet | 253 |
| Viskosität [mPas] | 2424 |

**Beispiel F: Organisches Blaupigment mit Harz gemäß Beispiel 2**

| | |
|---|---|
| Harz gemäß Beispiel 2 | 66,0 Tl. |
| 1-Methoxy-2-propylacetat (MPA) | 4,0 Tl. |
| EFKA 4330 | 10,0 Tl |
| Heliogenblau L 7101 F | 20,0 Tl. |
| VOC berechnet | 258 |
| Viskosität [mPas] | 2128 |

An den Beispielen E und F sieht man, daß zur Verringerung der flüchtigen Anteile in einer Pigmentpräparation auch solche Kondensationsharze eingesetzt werden können, die nicht aus kommerziell erhältlichen Produkten (Beispiele 1, A und B), sondern aus einem Zwischenprodukt stammen.

## Patentansprüche

1. Verfahren zur Verringerung der Viskosität eines Kondensationsharzes, **dadurch gekennzeichnet, daß** man ein im wesentlichen ausreagiertes Kondensationsharz, aufgebaut aus mindestens einem, bevorzugt genau einem Harnstoff, Formaldehyd und mindestens einem, bevorzugt genau einem CH-aciden Aldehyd in einem Molverhältnis von 1 zu 2 bis 15 zu 2 bis 15, mit mindestens einem monofunktionellen Alkohol in Gegenwart mindestens einer Brönstedt-Säure umsetzt.

2. Verfahren nach Anspruch 1, **dadurch gekennzeichnet, daß** in dem im wesentlichen ausreagierten Kondensationsharz die Aufbaukomponenten der Kondensationsharze, Harnstoff, Formaldehyd und CH-acider Aldehyd, zu mindestens 95%, miteinander reagiert haben.

3. Verfahren nach Anspruch 1 oder 2, **dadurch gekennzeichnet, daß** in der Herstellung des im wesentlichen ausreagierten Kondensationsharzes die Reaktion durch Neutralisierung eines in der Reaktion befindlichen Katalysators gestoppt und anschließend die flüchtigen Bestandteile zumindest teilweise durch Destillation entfernt wurden.

4. Verfahren nach einem der vorstehenden Ansprüche, **dadurch gekennzeichnet, daß** das im wesentlichen ausreagierte Kondensationsharz in mindestens einem Lösungsmittel ausgewählt aus der Gruppe bestehend aus Cyclohexan, Methylcyclohexan, Xylol und Toluol gelöst ist.

5. Verfahren zur Herstellung von Kondensationsharzen mit verringerter Viskosität aus mindestens einem, bevorzugt genau einem Harnstoff, Formaldehyd und mindestens einem, bevorzugt genau einem CH-aciden Aldehyd, wobei man Harnstoffe der allgemeinen Formel (I) und/oder (II) 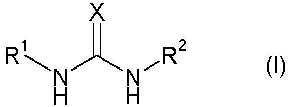 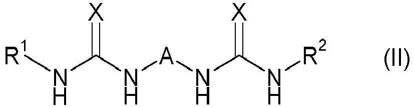 worin R¹ und R² unabhängig voneinander Wasserstoff oder gleiche oder verschiedene C₁ - C₂₀-Alkylreste , A einen C₁ - C₂₀-Alkylenrest und X Sauerstoff oder Schwefel bedeuten, mit Formaldehyd und einem CH-aciden Aldehyd der allgemeinen Formel (III) 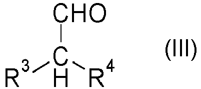 worin die Reste R³ und R⁴ unabhängig voneinander gleiche oder verschiedene Alkyl-, Cycloalkyl-, Aryl-, oder Alkylarylreste bedeuten oder R³ und R⁴ gemeinsam einen Ring bilden können, im Temperaturbereich zwischen 60 und 150°C in Gegenwart von Säuren oder Basen, gegebenenfalls in Gegenwart von Lösungs- und/oder Verdünnungsmittel umsetzt, **dadurch gekennzeichnet, daß** man nach Abschluß der Reaktion die Säuren oder Basen neutralisiert, flüchtige Bestandteile destillativ entfernt und anschließend in Gegenwart mindestens einer Säure mit mindestens einem Alkohol umsetzt.

6. Verfahren gemäß einem der vorstehenden Ansprüche, **dadurch gekennzeichnet, daß** der CH-acide Aldehyd ausgewählt ist aus der Gruppe bestehend aus Isobutyraldehyd, 2-Ethylhexanal, 2-Methylpentanal und Isovaleraldehyd.

7. Verfahren gemäß einem der vorstehenden Ansprüche, **dadurch gekennzeichnet, daß** es sich bei dem Alkohol um ein Alkylengylkol- oder Polyalkylenglykolmonoalkylether mit einem Molgewicht bis zu 300 g/mol handelt.

8. Verfahren gemäß einem der Ansprüche 1 bis 6, **dadurch gekennzeichnet, daß** der Alkohol ausgewählt ist aus der Gruppe bestehend aus Methanol, Ethanol, *iso*-Propanol, n-Propanol, n-Butanol, *iso*-Butanol, sek-Butanol, tert-Butanol, n-Pentanol, n-Hexanol, n-Heptanol, n-Octanol, 2-Ethylhexanol, 3-Propylheptanol, n-Decanol, n-Dodecanol (Laurylalkohol), Stearylalkohol, Cetylalkohol und Laurylalkohol.

9. Verfahren gemäß einem der vorstehenden Ansprüche, **dadurch gekennzeichnet, daß** die Umsetzung über einen Zeitraum von 1 bis 10 Stunden bei einer Temperatur von 40 bis 100 °C erfolgt.

10. Kondensationsharze erhältlich nach einem der vorstehenden Verfahren.

11. Pigmentpräparationen, enthaltend
- mindestens ein Pigment P,
- gegebenenfalls mindestens ein Verdünnungsmittel V,
- mindestens ein erfindungsgemäßes Kondensationsharz K gemäß Anspruch 10 sowie
- gegebenenfalls mindestens ein Additiv AD.

12. Verwendung von Kondensationsharzen K gemäß Anspruch 10 in Pigmentpräparationen.

## Claims

1. A method for reducing the viscosity of a condensation resin, which comprises reacting a substantially fully reacted condensation resin, synthesized from at least one, preferably precisely one, urea, formaldehyde, and at least one, preferably precisely one, CH-acidic aldehyde in a molar ratio of 1:2 to 15:2 to 15, with at least one monofunctional alcohol in the presence of at least one Bronsted acid.

2. The method according to claim 1, wherein the synthesis components of the condensation resins - urea, formaldehyde, and CH-acidic aldehyde - in the substantially fully reacted condensation resin have undergone reaction with one another to an extent of at least 95%.

3. The method according to claim 1 or 2, **characterized in that**, in the preparation of the substantially fully reacted condensation resin, the reaction has been stopped by neutralization of a catalyst present in the reaction, and subsequently the volatile constituents have been removed at least partly by distillation.

4. The method according to any of the preceding claims, wherein the substantially fully reacted condensation resin is dissolved in at least one solvent selected from the group consisting of cyclohexane, methylcyclohexane, xylene, and toluene.

5. A method for preparing condensation resins with reduced viscosity from at least one, preferably precisely one, urea, formaldehyde, and at least one, preferably precisely one, CH-acidic aldehyde, by reaction of ureas of the general formula (I) and/or (II) 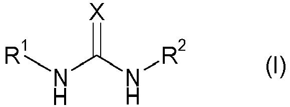 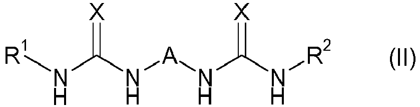 in which R¹ and R² independently of one another are hydrogen or identical or different C₁-C₂₀ alkyl radicals, A is a C₁-C₂₀ alkylene radical, and X is oxygen or sulfur, with formaldehyde and a CH-acidic aldehyde of the general formula (III) 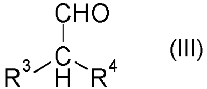 in which the radicals R³ and R⁴ independently of one another are identical or different alkyl, cycloalkyl, aryl or alkylaryl radicals or R³ and R⁴ together may form a ring, in the temperature range between 60 and 150°C in the presence of acids or bases, optionally in the presence of solvent and/or diluent, which comprises, after the end of the reaction, neutralizing the acids or bases, distillatively removing volatile constituents, and carrying out reactions subsequently with at least one alcohol in the presence of at least one acid.

6. The method according to any of the preceding claims, wherein the CH-acidic aldehyde is selected from the group consisting of isobutyraldehyde, 2-ethylhexanal, 2-methylpentanal, and isovaleraldehyde.

7. The method according to any of the preceding claims, wherein the alcohol is an alkylene glycol monoalkyl ether or polyalkylene glycol monoalkyl ether having a molar weight of up to 300 g/mol.

8. The method according to any of claims 1 to 6, wherein the alcohol is selected from the group consisting of methanol, ethanol, isopropanol, n-propanol, n-butanol, isobutanol, sec-butanol, tert-butanol, n-pentanol, n-hexanol, n-heptanol, n-octanol, 2-ethylhexanol, 3-propylheptanol, n-decanol, n-dodecanol (lauryl alcohol), stearyl alcohol, cetyl alcohol, and lauryl alcohol.

9. The method according to any of the preceding claims, wherein the reaction takes place over a period of 1 to 10 hours at a temperature of 40 to 100°C.

10. A condensation resin obtainable according to any of the preceding methods.

11. A pigment preparation comprising
- at least one pigment P,
- optionally at least one diluent V,
- at least one condensation resin K of the invention according to claim 10, and
- optionally at least one additive AD.

12. The use of a condensation resin K according to claim 10 in a pigment preparation.

## Revendications

1. Procédé pour la diminution de la viscosité d'une résine de condensation, **caractérisé en ce qu'**on transforme une résine de condensation essentiellement complètement réagie, construite à partir d'au moins une, préférablement exactement une, urée, de formaldéhyde et d'au moins un, préférablement exactement un, aldéhyde à CH acide en un rapport molaire de 1 sur 2 à 15 sur 2 à 15, avec au moins un alcool monofonctionnel en présence d'au moins un acide Brönsted.

2. Procédé selon la revendication 1, **caractérisé en ce que** dans la résine de condensation essentiellement complètement réagie, les composants de construction des résines de condensation, l'urée, le formaldéhyde et l'aldéhyde à CH acide ont réagi les uns avec les autres à hauteur d'au moins 95 %.

3. Procédé selon la revendication 1 ou 2, **caractérisé en ce que** dans la préparation de la résine de condensation essentiellement complètement réagie, la réaction a été stoppée par neutralisation d'un catalyseur se trouvant dans la réaction et ensuite les ingrédients volatils ont été éliminés au moins partiellement par distillation.

4. Procédé selon l'une quelconque des revendications précédentes, **caractérisé en ce que** la résine de condensation essentiellement complètement réagie est dissoute dans au moins un solvant choisi dans le groupe constitué par le cyclohexane, le méthylcyclohexane, le xylène et le toluène.

5. Procédé pour la préparation de résines de condensation dotées d'une viscosité réduite à partir d'au moins une, préférablement exactement une, urée, de formaldéhyde et d'au moins un, préférablement exactement un, aldéhyde à CH acide, dans lequel on transforme des urées des formules générales (I) et/ou (II) 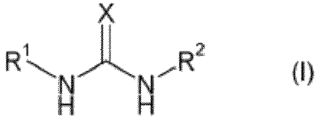 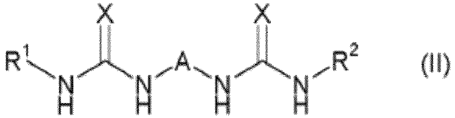 dans lesquelles R¹ et R² signifient indépendamment l'un de l'autre hydrogène ou des radicaux C₁₋₂₀-alkyle identiques ou différents, A signifie un radical C₁₋₂₀-alkylène et X signifie oxygène ou soufre, avec du formaldéhyde et un aldéhyde à CH acide de formule générale (III) 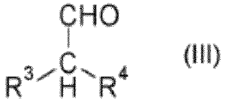 dans laquelle les radicaux R³ et R⁴ signifient indépendamment l'un de l'autre des radicaux alkyle, cycloalkyle, aryle ou alkylaryle, identiques ou différents ou R³ et R⁴ peuvent former ensemble un cycle, dans un domaine de température entre 60 et 150 °C en présence d'acides ou de bases, éventuellement en présence de solvant et/ou de diluant, **caractérisé en ce qu'**on neutralise les acides ou les bases après la complétion de la réaction, on élimine des ingrédients volatils par distillation et ensuite on met à réagir en présence d'au moins un acide avec au moins un alcool.

6. Procédé selon l'une quelconque des revendications précédentes, **caractérisé en ce que** l'aldéhyde à CH acide est choisi dans le groupe constitué par l'isobutyraldéhyde, le 2-éthylhexanal, le 2-méthylpentanal et l'isovaléraldéhyde.

7. Procédé selon l'une quelconque des revendications précédentes, **caractérisé en ce que** l'alcool est un monoéther d'alkyle d'un alkylèneglycol ou d'un polyalkylèneglycol doté d'un poids moléculaire jusqu'à 300 g/mole.

8. Procédé selon l'une quelconque des revendications 1 à 6, **caractérisé en ce que** l'alcool est choisi dans le groupe constitué par le méthanol, l'éthanol, l'isopropanol, le n-propanol, le n-butanol, l'*iso-*butanol, le sec-butanol, le tert-butanol, le n-pentanol, le n-hexanol, le n-heptanol, le n-octanol, le 2-éthylhexanol, le 3-propylheptanol, le n-décanol, le n-dodécanol (alcool laurylique), l'alcool stéarique, l'alcool cétylique et l'alcool laurylique.

9. Procédé selon l'une quelconque des revendications précédentes, **caractérisé en ce que** la transformation est réalisée sur une période de temps de 1 à 10 heures à une température de 40 à 100 °C.

10. Résines de condensation pouvant être obtenues par l'un des procédés précédents.

11. Préparations de pigment, contenant
- au moins un pigment P,
- éventuellement au moins un diluant V,
- au moins une résine de condensation K selon l'invention selon la revendication 10 ainsi que
- éventuellement au moins un additif AD.

12. Utilisation de résines de condensation K selon la revendication 10 dans des préparations de pigment.
